# EUROPÄISCHE PATENTSCHRIFT

(11) **EP 1 694 529 B1**
(45) Veröffentlichungstag und Bekanntmachung des Hinweises auf die Patenterteilung: **20.04.2011**
(21) Anmeldenummer: 04803189.2
(22) Anmeldetag: 19.11.2004
(51) Int. Cl.: B60N 2/30, B60N 2/015, B60N 2/36, B60N 2/42, B60N 2/427, B60N 2/68

(54) **LAGERANORDNUNG FÜR EINE UMKLAPPBARE RÜCKENLEHNE**
BEARING ARRANGEMENT FOR A FOLDABLE BACKREST
DISPOSITIF DE MONTAGE POUR UN DOSSIER RABATTABLE

(30) Priorität: 18.12.2003 DE 10359652
(43) Veröffentlichungstag der Anmeldung: 30.08.2006
(73) Patentinhaber: Bayerische Motoren Werke Aktiengesellschaft, 80809 München (DE); Johnson Controls GmbH, 51399 Burscheid (DE)
(72) Erfinder: LENEIS, Thomas, 85669 Reithofen (DE); MILDT, Helmut, R., 51789 Lindlar (DE); SZABLEWSKI, Piotr, 42399 Wuppertal (DE)
(86) Internationale Anmeldenummer: PCT/EP2004/013155
(87) Internationale Veröffentlichungsnummer: WO 2005/058637

(56) Entgegenhaltungen:
- EP-A- 0 808 745
- DE-A1- 10 030 822
- DE-C1- 19 926 093
- FR-A- 2 775 228

## Beschreibung

Die Erfindung betrifft eine Lageranordnung für eine geteilt umklappbare Rückenlehne.

Aus der DE 199 26 093 C1 ist eine Lageranordnung für eine umklappbare Rückenlehne bekannt, die eine Rohreinheit aufweist. Die Rohreinheit ist an ihren beiden Enden an einem Rahmen drehbar befestigbar und ist über ihre Länge an einer Rückenlehne anbringbar, sodass die Rückenlehne um die Rohreinheit schwenkbar ist. Die Rohreinheit weist ein erstes und ein zweites Rohr auf, die ineinander steckbare Bereiche aufweisen. Diese ineinander steckbaren Bereiche sind mit einer selbsthemmenden Klemmeinrichtung versehen, die ein ruckartiges Auseinanderziehen der beiden Rohre blockiert.

Aus der EP 0 808 745 A1 ist eine Lageranordnung für eine zweigeteilte Rückenlehne eines Fahrzeugs bekannt, wobei beide Rückenlehnenteile unabhängig voneinander um eine gemeinsame gedachte Achse umklappbar sind, und die Rückenlehnenteile dazu an ihren voneinander abgewandten Seiten jeweils in einem karosseriefesten Lager um die Achse schwenkbar gehalten werden, und an dem einen Rückenlehnenteil auf der dem anderen Rückenlehnenteil zugewandten Seite ein Lagerungsbolzen absteht, der in einer passenden Aufnahme im anderen Rückenlehnenteil um die Achse drehbar radial aufgenommen ist, wobei sich der Lagerungsbolzen und/oder die Aufnahme bei hohen auf die Rückenlehne wirkenden Kräften, wie sie bei einem Unfall entstehen, auch verformen könnten und sich der Lagerungsbolzen in axialer Richtung der Achse ja sogar aus der Aufnahme bewegen könnte.

Aufgabe der Erfindung ist es, eine Lageranordnung für eine umklappbare Rückenlehne zu schaffen, die einen einfachen Aufbau aufweist und bei einem Unfall eine hohe Sicherheit bietet.

Diese Aufgabe wird durch eine Lageranordnung für eine umklappbare Rückenlehne mit den Merkmalen des Patentanspruchs 1 gelöst.

Erfindungsgemäß sind bei einer zweigeteilten Rückenlehne eines Fahrzeugs beide Rückenlehnenteile unabhängig voneinander um eine gemeinsame gedachte Achse umklappbar. Die Rückenlehnenteile sind dazu an ihren voneinander abgewandten Seiten jeweils in einem karosseriefesten Lager um die Achse schwenkbar gehalten. An einem der beiden Rückenlehnenteile steht auf der dem anderen Rückenlehnenteil zugewandten Seite ein Lagerungsbolzen ab, der in einer passenden Aufnahme im anderen Rückenlehnenteil um die Achse drehbar radial aufgenommen ist. Bei hohen auf die Rückenlehne wirkenden Kräften, wie sie bei einem Unfall entstehen können, verformen sich der Lagerungsbolzen und / oder die Aufnahme derart, dass ein Formschluss und / oder Kraftschluss zwischen Lagerungsbolzen und Aufnahme entsteht, sodass auch in axialer Richtung der Achse zwischen den beiden Rückenlehnenteilen Kräfte übertragbar sind.

Dadurch entsteht im Crashfall auch bei einer sehr schnellen Verformung eine sichere mechanische axiale Verriegelung. Dies ist ein großer Vorteil gegenüber dem Stand der Technik, da bei einer Verriegelung durch bewegbare Maschinenelemente, die aufgrund ihrer Massenträgheit zwangsbewegt werden, die Verriegelung bei sehr schnellen Verformungen unter Umständen nicht schnell genug erfolgen kann. Zudem ist der erfindungsgemäße Aufbau einfach und weist wenige Bauteile auf, sodass gegenüber dem Stand der Technik eine Kosten-ersparnis erzielt werden kann.

Der Kraft- und / oder Formschluss zwischen Lagerungsbolzen und Aufnahme entsteht erst bei sehr hohen auf die Rückenlehne wirkenden Kräften. Somit ist die Montage einfach, da der Lagerungsbolzen zur Montage nur mit geringem Kraftaufwand in die Aufnahme gesteckt werden muss und keine Verschraubung oder sonstige zusätzliche Verbindung erforderlich ist. Solange es zu keiner Verformung kommt, ist auch die Demontage entsprechend einfach. Weder der Lagerungsbolzen noch die Aufnahme sind verschleißanfällig.

Bei hohen Kräften entsteht ein axialer Formschluss und damit indirekt ein Formschluss zwischen den beiden Rückenlehnenteilen. Diese grenzen seitlich normalerweise an die Seitenwände der Karosserie, sodass nach der Verformung die Rückenlehne in axialer Richtung als steifer Verbund zwischen den Seitenwänden der Karosserie gehalten ist.

Vorteilhafterweise ist der Lagerungsbolzen zwischen den beiden Rückenlehnenteilen über ein karosseriefestes Mittellager radial abgestützt. Dadurch reduzieren sich erheblich die zwischen Lagerungsbolzen und Aufnahme zu übertragenden radialen Kräfte. Das Mittellager muss keine axiale Sicherung aufweisen, da die axialen Kräfte durch den Kraft- und / oder Formschluss in die an die Rückenlehne angrenzenden Karosseriebereiche übertragen werden können. Dadurch kann ein kleines, leichtes Mittellager verwendet werden. Zur Montage muss das Mittellager nicht geteilt bzw. geöffnet werden können, sodass eine geschlossene Ausführung des Mittellagers möglich ist. Die Toleranzen am Mittellager können aufgrund der erfindungsgemäßen Anordnung in sehr engen Grenzen gehalten werden, sodass das Mittellager sehr schmal ausgeführt werden kann. Während bekannte Mittellager eine Breite von üblicherweise über 15 mm haben, können jetzt sehr schmale Lager mit einer Breite von beispielsweise 5 mm verwendet werden. Dadurch kann auch das Spaltbild zwischen den beiden Rückenlehnenteilen deutlich verbessert werden.

Weitere vorteilhafte Ausgestaltungen sind Gegenstand von Unteransprüchen. In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: einen Schnitt durch eine geteilt umklappbare Rückenlehne im Bereich eines Mittellagers und
- Fig. 2: eine perspektivische Ansicht des in Fig. 1 gezeigten Lagerungsbolzens in einer Aufnahme nach Einwirkung hoher Kräfte bei einem Crash.

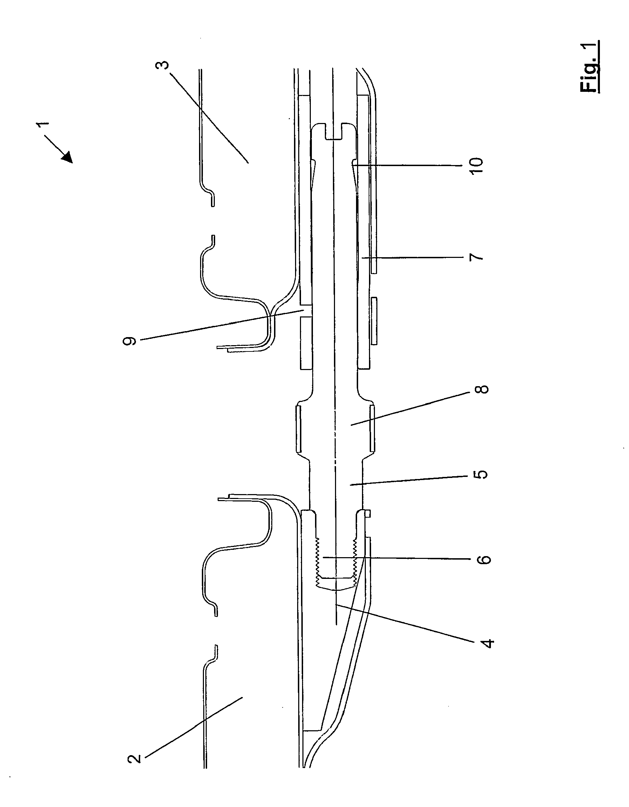

In Fig. 1 ist eine teilbare Rückenlehne 1 eines Personenkraftwagens dargestellt, die ein linkes und ein rechtes Rückenlehnenteil 2 und 3 aufweist. Die beiden Rückenlehnenteile 2 und 3 können unabhängig voneinander um eine gemeinsame Achse 4 nach vorne umgeklappt werden. Die Rückenlehne 1 ist zwischen den Seitenwänden der Karosserie des Personenkraftwagens eingebaut. Die beiden Rückenlehnenteile 2 und 3 sind jeweils mit ihren den Seitenwänden zugewandten Schmalseiten um die Achse 4 drehbar an den Seitenwänden befestigt. Am linken Rückenlehnenteil 2 ist auf der dem rechten Rückenlehnenteil 3 zugewandten Seite ein Lagerungsbolzen 5 über eine Schraubverbindung 6 so angebracht, dass die Längsachse des Lagerungsbolzen 5 sich mit der Achse 4 deckt. An dem rechten Rückenlehnenteil 3 ist im unteren, dem linken Rückenlehnenteil 2 zugewandten Bereich eine Hülse 7 als Aufnahme angebracht. Die Mittelachse der Hülse 7 deckt sich mit der Achse 4. Das der Schraubverbindung 6 gegenüberliegende Ende des Lagerungsbolzens 5 steckt in der Hülse 7. Der Lagerungsbolzen 5 ist mit seinem mittleren Bereich 8 radial über ein karosseriefestes Mittellager gehalten. Somit sind beide Rückenlehnenteile 2 und 3 um die Achse 4 schwenkbar radial gehalten.

Die Hülse 7 weist in der dem Mittellager zugewandten Hälfte einen radialen Einschnitt 9 auf, der von der Tiefe her etwa bis zur Mitte des Querschnitts der Hülse 7 geht. Der Lagerungsbolzen 5 weist zumindest eine umlaufende Nut 10 im Endbereich des in der Hülse 7 gehaltenen Abschnitts auf.

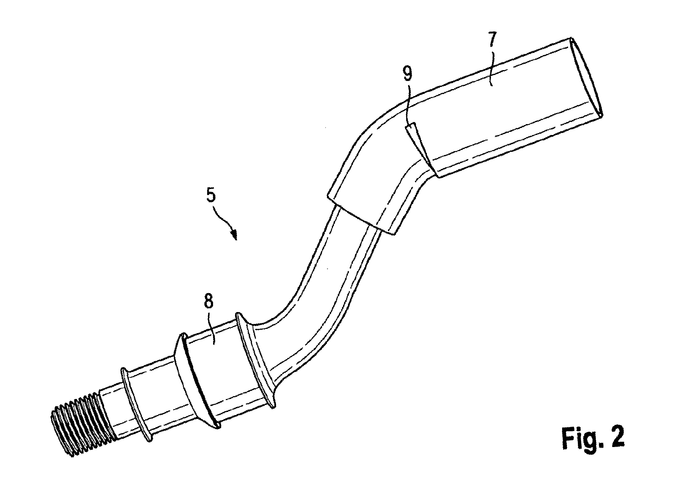

Wenn nun hohe Kräfte auf die Rückenlehne 1 wirken, neigt die Hülse 7 - wie in Fig. 2 gezeigt - vor allem im Bereich des Einschnitts 9 dazu sich zu verbiegen. Dadurch kommt es zu einem Kraft- und Reibschluss zwischen dem Lagerungsbolzen 5 und der Hülse 7, sodass es zu einer axialen Verriegelung zwischen den beiden Bauteilen kommt. Der Rand der Nut 10 des Lagerungsbolzens 5 gräbt sich zudem in die Innenwand der verformten Hülse 7 ein und / oder verhakt sich formschlüssig in dem Einschnitt 9, wenn axiale Kräfte den Lagerungsbolzen 5 aus der verformten Hülse 7 herausziehen wollen. Damit ist die Rücksitzlehne 1 als ganzes axial gehalten, da sie aufgrund der Seitenwände der Karosserie nicht seitlich ausweichen kann. Das Mittellager muss also keine axialen Kräfte aufnehmen können und kann daher als einfaches Radiallager ausgeführt sein.

Die Qualität des Kraft- bzw. Formschlusses wird maßgeblich durch die Geometrien des Lagerungsbolzens 5 und seiner Nut 10 sowie durch die Geometrie der Hülse 7 und ihres Einschnitts 9 bestimmt. Neben den Toleranzen des Lagerungsbolzens 5 relativ zur Hülse 7 kann natürlich auch durch die Anzahl der Nuten 10 und der Einschnitte 9 die Qualität der axialen Verriegelung beeinflusst werden.

## Patentansprüche

1. Lageranordnung für eine zweigeteilte Rückenlehne (1) eines Fahrzeugs, wobei beide Rückenlehnenteile (2, 3) unabhängig voneinander um eine gemeinsame gedachte Achse (4) umklappbar sind, und die Rückenlehnenteile (2, 3) dazu an ihren voneinander abgewandten Seiten jeweils in einem karosseriefesten Lager um die Achse (4) schwenkbar gehalten werden, und an dem einen Rückenlehnenteil (2) auf der dem anderen Rückenlehnenteil (3) zugewandten Seite ein Lagerungsbolzen (5) absteht, der in einer passenden Aufnahme (7) im anderen Rückenlehnenteil (3) um die Achse (4) drehbar radial aufgenommen ist, wobei sich der Lagerungsbolzen (5) und / oder die Aufnahme (7) bei hohen auf die Rückenlehne (1) wirkenden Kräften, wie sie bei einem Unfall entstehen, derart verformen, dass ein Formschluss und / oder Kraftschluss zwischen Lagerungsbolzen (5) und Aufnahme (7) entsteht, sodass auch in axialer Richtung der Achse (4) zwischen den beiden Rückenlehnenteilen (2, 3) Kräfte übertragbar sind, wobei die Aufnahme (7) eine Hülse ist, die zumindest einen radialen Einschnitt (9) aufweist.

2. Lageranordnung nach Anspruch 1, **dadurch gekennzeichnet, dass** der Lagerungsbolzen (5) zwischen den beiden Rückenlehnenteilen (2, 3) über ein karosseriefestes Mittellager radial abgestützt ist.

3. Lageranordnung nach Anspruch 1 oder 2, **dadurch gekennzeichnet, dass** der radiale Einschnitt (9) etwa bis zur Mitte des Querschnitts der Hülse (7) geht.

4. Lageranordnung nach einem der vorhergehenden Ansprüche, **dadurch gekennzeichnet, dass** der Lagerungsbolzen (5) zumindest eine umlaufende Nut (10) in dem Bereich aufweist, der sich in der Aufnahme (7) befindet.

## Claims

1. A bearing arrangement for a two-part back rest (1) for a vehicle, wherein the two parts (2, 3) of the back rest can be independently swung around an imaginary common axis (4) and to this end the parts (2, 3) are each held at their side remote from one another so as to be pivotable around the axis (4) in a bearing fixed to the body, and a bearing pin (5) on one part (2) projects on the side facing the other part (3) and is radially received in a matching holding fixture (7) in the other part (3) so as to be rotatable around the axis (4), wherein if strong forces act on the back rest (1), e.g. in an accident, the pin (5) and /or the fixture (7) are so deformed that a positive or non-positive connection is made between the bearing pin (5) and the fixture (7), so that forces can be transmitted between the two parts (2, 3) even in the axial direction of the axis (4), wherein the fixture (7) is a sleeve formed with at least one radial incision (9).

2. A bearing arrangement according to claim 1, **characterised in that** the bearing pin (5) is radially supported by a central bearing fixed to the body, between the two parts (2, 3).

3. A bearing arrangement according to claim 1 or claim 2, **characterised in that** the radial incision (9) extends approximately up to the middle of the cross-section of the sleeve (7).

4. A bearing arrangement according to any of the preceding claims, **characterised in that** the bearing pin has at least one peripheral groove (10) in the region situated in the holding fixture (7).

## Revendications

1. Dispositif de palier pour un dossier (1) en deux parties d'un véhicule,
les deux parties de dossier (2, 3) pouvant se rabattre indépendamment l'une de l'autre autour d'un axe géométrique (4), commun, et les parties de dossier (2, 3) sont montées pivotantes par leur côtés avant opposés, chaque fois dans un palier solidaire de la carrosserie, en pouvant pivoter autour de l'axe (4) et la partie de dossier (2) sur le côté tourné vers l'autre partie de dossier (3), a un goujon de palier (5) en saillie venant dans un logement adapté (7) de l'autre partie de dossier (3) pour tourner radialement autour de l'axe (4),
le goujon de palier (5) et/ou le logement (7), sous l'effet d'efforts importants appliqués au dossier (1), comme ceux engendrés par un accident, se déforment pour développer une liaison par la forme et/ou par la force entre le goujon de palier (5) et le logement (7) de façon que des forces puissent se transmettre dans la direction axiale de l'axe (4) entre les deux parties de dossier (2, 3),
le logement (7) étant un manchon ayant au moins une entaille radiale (9).

2. Dispositif de palier selon la revendication 1,
**caractérisé en ce que**
le goujon de palier (5) est appuyé radialement entre les deux parties de dossier (2, 3) par un palier central solidaire de la carrosserie.

3. Dispositif de palier selon la revendication 1 ou 2,
**caractérisé en ce que**
l'entaille radiale (9) arrive sensiblement jusqu'au milieu de la section du manchon (7).

4. Dispositif de palier selon l'une des revendications précédentes,
**caractérisé en ce que**
le goujon de palier (5) comporte au moins une rainure périphérique (10) dans la zone qui se trouve dans le logement (7).
